Europäisches Patentamt

European Patent Office

Office européen des brevets

(19)

(11) **EP 1 491 747 A2**

(12) **EUROPÄISCHE PATENTANMELDUNG**

| | |
|---|---|
| (43) Veröffentlichungstag:<br>**29.12.2004 Patentblatt 2004/53** | (51) Int Cl.7: **F02D 41/00**, F02D 23/00 |

(21) Anmeldenummer: **04009717.2**

(22) Anmeldetag: **23.04.2004**

| | |
|---|---|
| (84) Benannte Vertragsstaaten:<br>**AT BE BG CH CY CZ DE DK EE ES FI FR GB GR<br>HU IE IT LI LU MC NL PL PT RO SE SI SK TR**<br>Benannte Erstreckungsstaaten:<br>**AL HR LT LV MK** | (71) Anmelder: **ROBERT BOSCH GMBH<br>70442 Stuttgart (DE)** |
| (30) Priorität: **23.06.2003 DE 10328058** | (72) Erfinder:<br>• **Wegener, Sabine<br>71679 Asperg (DE)**<br>• **Wild, Ernst<br>71739 Oberriexingen (DE)** |

(54) **Verfahren und Vorrichtung zum Betrieb einer Brennkraftmaschine mit einem Abgasturbolader**

(57)     Es wird ein Verfahren zum Betrieb einer Brennkraftmaschine (1) mit einem Abgasturbolader (5, 10,15) vorgeschlagen, dass in einem stationären Zustand der Brennkraftmaschine (1) eine präzise und wenig aufwändige Ermittlung eines Abgasgegendruckes ermöglicht. Dabei wird in dem stationären Zustand der Brennkraft-maschine (1) der Abgasgegendruck aus der Bedingung abgeleitet, dass der in ein Volumen (20) zwischen mindestens einem Auslassventil (25) der Brennkraftmaschine (1) und einer Turbine (5) des Abgasturboladers (5, 10,15) zufließende Abgasmassenstrom gleich dem aus diesem Volumen (20) abfließende Abgasmassen-strom ist.

Fig. 1

EP 1 491 747 A2

**Beschreibung**

Stand der Technik

Die Erfindung geht von einem Verfahren und von einer Vorrichtung zum Betrieb einer Brennkraftmaschine nach der Gattung der unabhängigen Ansprüche aus.

Für verschiedene Zwecke, wie zum Beispiel zur Berechnung des Restgases im Brennraum der Brennkraftmaschine wird die Kenntnis des Druckes in Strömungsrichtung nach dem oder den Auslassventilen benötigt. Dieser Druck wird auch als Abgasgegendruck bezeichnet. Um die Kosten für einen Drucksensor zu sparen, wird dieser Druck modelliert. Bei einem Saugmotor berechnet das Modell aus dem Umgebungsdruck und dem Druckabfall in der Auspuffanlage den Druck in Strömungsrichtung des Abgases nach dem oder den Auslassventilen. Bei Motoren mit Abgasturboladern befindet sich in Strömungsrichtung nach dem oder den Auslassventilen eine Turbine des Abgasturboladers. In einem Bypass zur Turbine sitzt eine Klappe, die von einer Ladedruckregelung zur Steuerung des Abgasmassenstroms über die Turbine verstellt werden kann. Zur Bestimmung des Abgasgegendruckes ist der Druckabfall an der Turbine mit dem Bypass zu berücksichtigen.

Vorteile der Erfindung

Das erfindungsgemäße Verfahren und die erfindungsgemäße Vorrichtung mit den Merkmalen der unabhängigen Ansprüche haben demgegenüber den Vorteil, dass in einem stationären Zustand der Brennkraftmaschine ein Abgasgegendruck aus der Bedingung abgeleitet wird, dass der in ein Volumen zwischen mindestens einem Auslassventil der Brennkraftmaschine und einer Turbine des Abgasturboladers zufließende Abgasmassenstrom gleich dem aus diesem Volumen abfließende Abgasmassenstrom ist. Auf diese Weise lässt sich ohne zusätzlichen Drucksensor und mit geringem Rechenaufwand der Abgasgegendruck mit hoher Genauigkeit für stationäre Betriebsbedingungen der Brennkraftmaschine ermitteln.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der aus dem Volumen abfließende Abgasmassenstrom der von der Turbine abfließende Abgasmassenstrom ist. Somit lässt sich der aus dem Volumen abfließende Abgasmassenstrom besonders einfach und präzise bestimmen.

Ein weiterer Vorteil ergibt sich, wenn die Turbine einen Bypass umfasst und der von der Turbine abfließende Abgasmassenstrom aus der Summe eines konstantes Normmassenstroms durch die Turbine selbst und eines von einem Öffnungsquerschnitt des Bypasses abhängigen Normmassenstroms durch den Bypass gebildet wird. Auf diese Weise wird sowohl der Abgasmassenstrom durch den Bypass, als auch der Abgasmassenstrom durch die Turbine berücksichtigt und somit die zu bestimmende Abgasmasse besonders genau bestimmt. Der Einfluss des Bypasses auf den Abgasgegendruck kann somit berücksichtigt werden.

Vorteilhaft ist es, wenn der Normmassenstrom durch den Bypass in Abhängigkeit des Öffnungsquerschnitts des Bypasses aus einer Kennlinie ermittelt wird. Auf diese Weise ist keine zusätzliche Sensorik zur Ermittlung des Normmassenstroms durch den Bypass erforderlich, so dass Aufwand eingespart werden kann.

Vorteilhaft ist weiterhin, wenn Abweichungen von Normbedingungen bei der Ermittlung des von der Turbine abfließenden Abgasmassenstroms durch mindestens einen Korrekturfaktor für Temperatur, Druck und/oder Strömungsgeschwindigkeit berücksichtigt werden. Auf diese Weise werden aktuelle Betriebs- bzw. Umweltbedingungen der Brennkraftmaschine bei der Ermittlung des Abgasgegendruckes berücksichtigt, so dass dieser besonders genau ermittelt werden kann.

Besonders vorteilhaft ist es, wenn ein Korrekturfaktor für den Druck aus einem Quotienten des ermittelten Druckes nach dem mindestens einen Auslassventil und einem Normdruck gebildet wird. Auf diese Weise wird der ermittelte Abgasgegendruck zur Berechnung des von der Turbine abfließenden Abgasmassenstroms zurückgekoppelt. Vorteilhaft ist weiterhin, wenn der Korrekturfaktor für die Strömungsgeschwindigkeit aus einer Kennlinie in Abhängigkeit eines Quotienten eines Druckes nach der Turbine und des ermittelten Druckes nach dem mindestens einen Auslassventil ermittelt wird. Auch auf diese Weise wird eine Rückkopplung des ermittelten Abgasgegendruckes zur Berechnung des von der Turbine abfließenden Abgasmassenstroms realisiert.

Besonders vorteilhaft ist es weiterhin, wenn zur Bestimmung des Abgasgegendruckes eine Kennlinie gebildet wird, die eine Eingangsgröße, die durch den dem Volumen zufließenden Abgasmassenstrom multipliziert mit einem Normdruck und dividiert durch das Produkt aus einem Korrekturfaktor für die Temperatur und dem Normmassenstrom durch die Turbine und den Bypass gebildet wird, in eine Ausgangsgröße abbildet, die einem Quotienten aus dem Abgasgegendruck und einem Druck nach dem mindestens einen Auslassventil entspricht. Auf diese Weise lässt sich der Abgasgegendruck mit Hilfe der Kennlinie mathematisch präzise und mit wenig Rechenaufwand ermitteln.

Zeichnung

Ein Ausführungsbeispiel der Erfindung ist in der Zeichnung dargestellt und in der nachfolgenden Beschreibung näher erläutert.

Es zeigen

Figur 1 ein Blockschaltbild einer Brennkraftmaschine mit Abgasturbolader,
Figur 2 ein Funktionsdiagramm zur Bestimmung des Abgasgegendruckes ausgehend von einem dynamischen Betriebszustand der Brennkraftmaschine und
Figur 3 ein Funktionsdiagramm zur Veranschaulichung des erfindungsgemäßen Verfahrens und der erfindungsgemäßen Vorrichtung.

Beschreibung des Ausführungsbeispiels

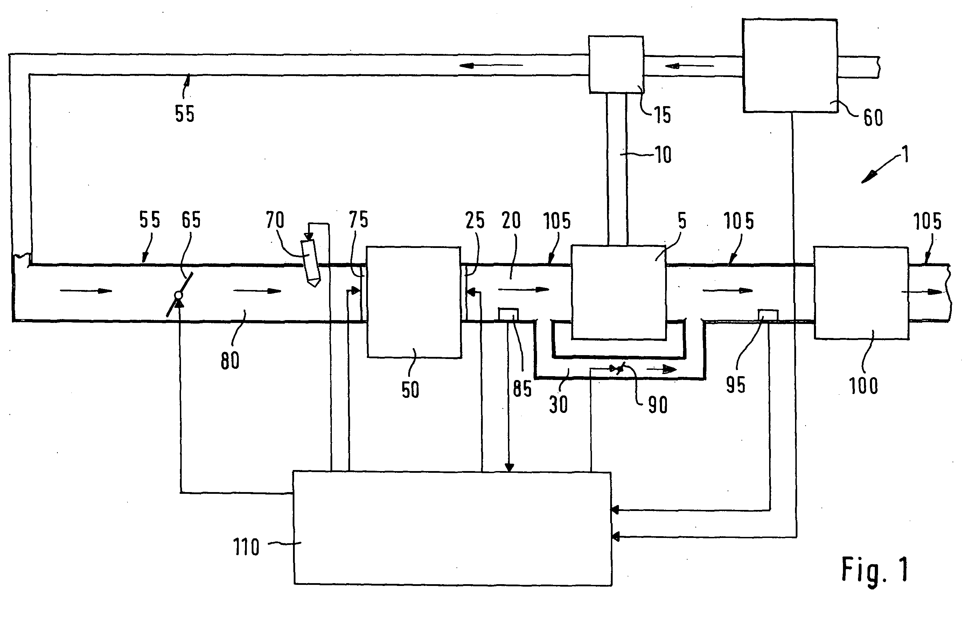

In Figur 1 kennzeichnet 1 eine Brennkraftmaschine, beispielsweise eines Kraftfahrzeugs. Die Brennkraftmaschine 1 umfasst einen Verbrennungsmotor 50, der beispielsweise als Otto-Motor oder als Diesel-Motor ausgebildet sein kann. Im Folgenden wird beispielhaft angenommen, dass der Verbrennungsmotor 50 als Otto-Motor ausgebildet ist. Über eine Luftzufuhr 55 wird dem Otto-Motor 50 Frischluft zugeführt. Die Strömungsrichtung der Frischluft ist dabei in Figur 1 durch Pfeile dargestellt. In der Luftzufuhr 55 ist ein Luftmassenmesser 60, beispielsweise ein Heißfilm-Luftmassenmesser angeordnet, der den zugeführten Luftmassenstrom misst und das Messergebnis an eine Motorsteuerung 110 zur Weiterverarbeitung weiterleitet. Dem Luftmassenmesser 60 in Strömungsrichtung nachfolgend angeordnet ist in der Luftzufuhr 55 eine Drosselklappe 65, deren Öffnungsgrad von der Motorsteuerung 110 eingestellt wird. Der Drosselklappe 65 in Strömungsrichtung nachfolgend angeordnet ist gemäß Figur 1 ein Einspritzventil 70, über das Kraftstoff eingespritzt wird, und das von der Motorsteuerung 110 zur Realisierung einer vorgegebenen Einspritzmenge, beispielsweise zur Einhaltung eines vorgegebenen Luft-/Kraftstoff-Gemischverhältnisses angesteuert wird. Frischluft und Kraftstoff gelangen über ein Einlassventil 75 in einen Brennraum des Otto-Motors 50. Der Abschnitt der Luftzufuhr 55 zwischen der Drosselklappe 65 und dem Einlassventil 75 wird auch als Saugrohr 80 bezeichnet. Das im Brennraum des Otto-Motors 50 befindliche Luft-/Kraftstoff-Gemisch wird durch eine in Figur 1 nicht dargestellte Zündkerze gezündet und treibt in bekannter Weise einen oder mehrere Kolben des Otto-Motors 50 an. Das bei der Verbrennung entstandene Abgas wird über ein Auslassventil 25 in einen Abgasstrang 105 der Brennkraftmaschine 1 ausgestoßen. Die Öffnungs- und Verschluss-Zeiten des Einlassventils 75 und des Auslassventils 25 können von der Motorsteuerung 110 im Falle einer voll variablen Ventilsteuerung eingestellt werden. Alternativ können die Öffnungs- und Verschlusszeiten des Einlassventils 75 und des Auslassventils 25 durch eine jeweils zugeordnete Nockenwelle in dem Fachmann bekannter Weise eingestellt werden. Die Strömungsrichtung des Abgases im Abgasstrang 105 ist ebenfalls durch Pfeile gekennzeichnet. Dem Auslassventil 25 in Strömungsrichtung des Abgases nachfolgend angeordnet ist eine Turbine 5 eines Abgasturboladers, die von einem Bypass 30 umgangen werden kann. Der Bypass 30 umfasst dazu ein Bypassventil 90, dessen Öffnungsgrad ebenfalls von der Motorsteuerung 110 zur Erzielung eines vorgegebenen Ladedrucks eingestellt werden kann. Das Volumen des Abgasstrangs 105 zwischen dem Auslassventil 25 und der Turbine 5 ist in Figur 1 mit dem Bezugszeichen 20 gekennzeichnet. Im Volumen 20 kann, wie in Figur 1 dargestellt, optional ein Temperatursensor 85 angeordnet sein, der die Temperatur im Volumen 20 misst und den Messwert an die Motorsteuerung 110 weiterleitet. Die vom Abgasmassenstrom angetriebene Turbine 5 des Abgasturboladers treibt über eine Welle 10 einen Verdichter 15 des Abgasturboladers in der Luftzufuhr 55 zur Verdichtung der der Brennkraftmaschine 1 zugeführten Luft an. Der Luftmassenmesser 60 ist dabei dem Verdichter 15 in Strömungsrichtung der Frischluft vorgeschaltet. Der Turbine 5 in Strömungsrichtung des Abgases nachfolgend angeordnet ist beispielsweise ein Katalysator 100. Zwischen der Turbine 5 und dem Katalysator 100 kann optional ein Drucksensor 95 angeordnet sein, der den Druck zwischen der Turbine 5 und dem Katalysator 100 misst und das Messergebnis an die Motorsteuerung 110 weiterleitet.

Je nach Anzahl der Zylinder des Otto-Motors 50 können ein oder mehrere Einlassventile 75 und ein oder mehrere Auslassventile 25 vorgesehen sein. Ferner kann statt der in Figur 1 dargestellten Saugrohreinspritzung eine Direkteinspritzung von Kraftstoff in den Brennraum des Otto-Motors 50 erfolgen. Im Falle der Ausbildung des Verbrennungsmotors 50 als Dieselmotor kann auf die Drosselklappe 65 und die in Figur 1 nicht dargestellte Zündkerze verzichtet werden.

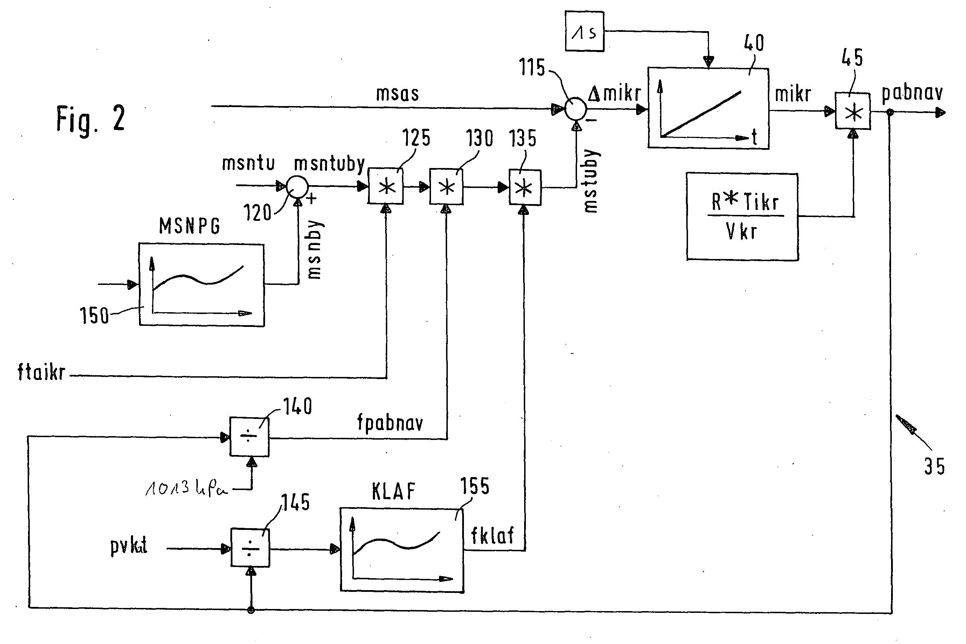

In Figur 2 ist ein Funktionsdiagramm zur Ermittlung des Druckes in Strömungsrichtung des Abgases nach dem Auslassventil 25 dargestellt. Dieser Druck wird auch als Abgasgegendruck bezeichnet und im Folgenden durch die Abkürzung pabnav repräsentiert. Die Kenntnis des Abgasgegendrucks ist insbesondere zur Ermittlung des Restgases im Brennraum des Otto-Motors 50 erforderlich. Ein Integrator 40 bildet das Massenspeicherverhalten des Volumens 20 zwischen dem Auslassventil 25 und der Turbine 5 nach. Dieser Abschnitt des Abgasstrangs 105 zwischen dem Auslassventil 25 und der Turbine 5 wird auch als Abgaskrümmer bezeichnet und das Volumen 20 auch als Krümmervolumen. Eingangsgröße des Integrators 40 ist die Differenz Δmikr zwischen dem Abgasmassenstrom msas der dem Volumen 20 von dem Auslassventil 25 zufließt, und dem über die Turbine 5 und den Bypass 30 abfließenden Abgasmassenstrom mstuby. Die Differenz Δmikr wird dabei in einem ersten Subtraktionsglied 115 gebildet. Der von dem Auslassventil 25 zufließende Abgasmassenstrom msas kann in der Motorsteuerung 110 aus dem vom Luftmassenmesser 60 gemessenen Luftmassenstrom und dem eingespritzten Kraftstoffmassenstrom berechnet werden. Der eingespritzte Kraftstoffmassenstrom ist, wie beschrieben, eine bekannte Größe in der Motorsteuerung 110, da er von der Motorsteuerung 110 zur Einstellung eines vorgegebenen Luft-/Kraftstoff-Gemischverhältnisses in Abhängigkeit des gemessenen Luftmassenstroms vorgegeben wird. Die Ermittlung des vom Auslassventil 25 in das Volumen 20 zufließenden Abgasmassenstroms msas aus dem vom Luftmassenmesser 60 gemessenen Luftmassenstrom und dem in der Motorsteuerung 110 bekannten eingespritzten Kraftstoffmassenstrom erfolgt in dem Fachmann bekannter Weise mit Hilfe eines Modells.

Bei positiver Differenz Δmikr fließt mehr Abgas in das Volumen 20 zu als ab. Die Abgasmasse mikr im Volumen 20 als Ausgangsgröße des Integrators 40 steigt dann an. Bei negativer Differenz Δmikr fließt mehr ab als zu. Die Abgasmasse mikr im Volumen 20 sinkt dann. Ist die Differenz Δmikr gleich Null, so ist der Abgaszufluss im Volumen 20 gleich groß, wie der Abgasabfluss und die Abgasmasse mikr im Volumen 20 bleibt konstant.

Mit der allgemeinen Gasgleichung wird die Abgasmasse mikr im Volumen 20 in den Druck pabnav in Strömungsrichtung nach dem Auslassventil 25 umgerechnet. Dieser Abgasgegendruck pabnav ergibt sich somit mit Hilfe der allgemeinen Gasgleichung zu:

$$pabnav = mikr * R * Tikr / Vkr \qquad (1)$$

Dabei ist R die allgemeine Gaskonstante, Tikr die Gastemperatur im Volumen 20 und Vkr das Volumen 20 beispielsweise in $m^3$. Die Gastemperatur oder Abgastemperatur Tikr im Volumen 20 kann entweder vom Temperatursensor 85 gemessen werden oder, um den Temperatursensor 85 einzusparen, in der Motorsteuerung 110 über ein Modell in dem Fachmann bekannter Weise aus dem eingespritzten Kraftstoffmassenstrom, dem Abgasmassenstrom msas, der vom Auslassventil 25 in das Volumen 20 zufließt und im Falle des Otto-Motors 50 in Abhängigkeit vom Zündwinkelwirkungsgrad berechnet werden. Das Volumen Vkr des Abgaskrümmers 20 kann in der Motorsteuerung 110 als bekannte Größe abgespeichert sein. Entsprechendes gilt für die allgemeine Gaskonstante R. Im Funktionsdiagramm gemäß Figur 2 sind dann Mittel 45 zur Ermittlung des Abgasgegendrucks pabnav in Form eines ersten Multiplikationsgliedes 45 vorgesehen, die die Abgasmasse mikr am Ausgang des Integrators 40 mit dem Quotienten R * Tikr/Vkr multiplizieren. Das Ergebnis ist der Abgasgegendruck pabnav. Der Abgasgegendruck pabnav wird für die Berechnung des aus dem Volumen 20 abfließenden Abgasmassenstroms zurückgekoppelt. Mit der Annahme, dass sich die Turbine 5 und der Bypass 30 bezüglich des Durchflussverhaltens des Abgases in Form einer Drossel beschreiben fassen, gilt unter Normbedingungen, dass der aus dem Volumen 20 über die Turbine 5 und den Bypass 30 abfließende Normmassenstrom msntuby sich aus der Summe des Normmassenstroms msntu über die Turbine 5 und den Normmassenstrom msnby über den Bypass 30 zusammensetzt. Der Normmassenstrom msntu über die Turbine 5 und der Normmassenstrom msnby über den Bypass 30 werden in einem ersten Additionsglied 120 addiert und bilden so den über die Turbine 5 und den Bypass 30 abfließenden Normmassenstrom msntuby. Die Normbedingungen sind beispielsweise wie folgt vorgegeben:

Der Normdruck pabnav_norm in Strömungsrichtung des Abgases nach dem Auslassventil 25 beträgt 1013 hPa. Die Normabgastemperatur Taikr_norm im Krümmer 20 beträgt 273 K. Die Normströmungsgeschwindigkeit im Volumen 20 ist gleich der Schallgeschwindigkeit.

Für die Berechnung des Abgasgegendrucks pabnav wird angenommen, dass sowohl die Turbine 5, als auch der Bypass 30 mit dem Bypassventil 90 strömungstechnisch jeweils als eine Drossel beschrieben werden können. Sowohl die Turbine 5, als auch der Bypass 30 mit dem Bypassventil 90 haben den Druck und die Temperatur vor und nach der jeweiligen Drossel gemeinsam.

Bei der Turbine 5 ist der Normmassenstrom msntu unter Normbedingungen in der Motorsteuerung 110 bekannt und konstant. Der Normmassenstrom msnby des Bypasses 30 ist abhängig vom Öffnungsquerschnitt im Bereich des Bypassventils 90. Die Stellung des Bypassventils 90, das gemäß Figur 1 als Drosselklappe ausgebildet sein kann, ist abhängig vom Hub eines in Figur 1 nicht dargestellten Stellgliedes oder Stellers zur Einstellung der Stellung des Bypassventils 90. Dieser Hub wird von der Motorsteuerung 110 zur Einstellung eines vorgegebenen Ladedrucks vorgegeben. Der Öffnungsquerschnitt des Bypasses 30 im Bereich des Bypassventils 90 hängt von diesem Hub des Stellers ab. Die erfindungsgemäße Vorrichtung 35 gemäß dem Funktionsdiagramm nach Figur 2 ist beispielsweise in der Motorsteuerung 110 software- und/oder hardwaremäßig realisiert. Die Vorrichtung 35 umfasst eine Kennlinie MSNPG, die in Figur 2 mit dem Bezugszeichen 150 gekennzeichnet ist und die als Eingangsgröße den Hub des Stellers des Bypassventils 90 und als Ausgangsgröße den Normmassenstrom msnby durch den Bypass 30 aufweist. Die Kennlinie MSNPG beschreibt somit den Zusammenhang zwischen dem Normmassenstrom msnby durch den Bypass 30 in Abhängigkeit vom Hub des Stellers des Bypassventils 90. Die Kennlinie MSNPG kann beispielsweise auf einem Prüfstand unter den genannten Normbedingungen appliziert werden. Der sich bildende Normmassenstrom msnby in Abhängigkeit des jeweils von der Motorsteuerung 110 vorgegebenen Hubs des Stellers des Bypassventils 90 kann für die Applikation der Kennlinie MSNPG durch einen Massenstrommesser im Volumen 20 ermittelt werden oder durch den Luftmassenmesser 60 und der bekannten Kraftstoffmasse im stationären Zustand der Brennkraftmaschine.

Weicht mindestens eine der Betriebs- oder Umweltbedingungen der Brennkraftmaschine 1 von den genannten Normbedingungen ab, dann werden mit Hilfe eines oder mehrer Korrekturfaktoren die Abweichung oder die Abweichungen in der Berechnung des über die Turbine 5 und den Bypass 30 abfließenden Abgasmassenstroms berücksichtigt. Über einen ersten Korrekturfaktor ftaikr kann eine Abweichung der aktuellen Temperatur von der Normtemperatur berücksichtigt werden. Der erste Korrekturfaktor ftaikr wird wie folgt gebildet:

$$ftaikr = \sqrt{\frac{Taikr\_norm}{Taikr}} \qquad (2)$$

Dabei ist Taikr die aktuelle Abgastemperatur im Krümmer 20 und entspricht damit der Temperatur Tikr aus Gleichung (1).

Der erste Korrekturfaktor ftaikr wird über ein zweites Multiplikationsglied 125 mit dem über die Turbine 5 und den Bypass 30 abfließenden Normmassenstrom msntuby multipliziert.

Ein zweiter Korrekturfaktor fpabnar berücksichtigt die Abweichung des aktuell ermittelten Abgasgegendrucks pabnav vom Normdruck pabnav_norm. Der zweite Korrekturfaktor wird wie folgt gebildet:

$$fpabnav = \frac{pabnav}{pabnav\_norm} \qquad (3)$$

Der zweite Korrekturfaktor fpabnav wird mittels eines ersten Divisionsgliedes 140 durch Division des ermittelten Abgasgegendrucks pabnav durch den Normdruck pabnav_norm von in diesem Beispiel 1013 hPa gebildet und in einem dritten Multiplikationsglied 130 mit dem Ausgang des zweiten Multiplikationsgliedes 125 multipliziert.

Ferner ist ein dritter Korrekturfaktor fklaf vorgesehen, der die Abweichung der aktuellen Strömungsgeschwindigkeit des Abgases im Volumen 20 von der Schallgeschwindigkeit berücksichtigt. Der dritte Korrekturfaktor fklaf ist dabei wie folgt gegeben:

$$fklaf = \frac{\text{aktuelle Strömungsgeschwindigkeit}}{\text{Schallgeschwindigkeit}} \qquad (4)$$

Der dritte Korrekturfaktor fklaf hängt vom Verhältnis des Druckes pvkat im Abgasstrang 105 in Strömungsrichtung des Abgases nach der Turbine 5 und vor dem Katalysator 100 zum ermittelten Abgasgegendruck pabnav in Strömungsrichtung des Abgases nach dem Auslassventil 25 und vor der Turbine 5 ab. Diese Abhängigkeit ist gemäß der Vorrichtung 35 in Figur 2 durch die Kennlinie KLAF berücksichtigt, die auch durch das Bezugszeichen 155 gekennzeichnet ist. Sie liefert als Ausgangsgröße den dritten Korrekturfaktor fklaf. Als Eingangsgröße ist ihr der Quotient pvkat/pabnav zugeführt, der in einem zweiten Divisionsglied 145 gebildet wird. Der Druck pvkat in Strömungsrichtung des Abgases nach der Turbine 5 und vor dem Katalysator 100 kann durch den Drucksensor 95 erfasst werden. Ist entgegen dem hier beschriebenen Ausführungsbeispiel nach Figur 1 kein Katalysator vorhanden, so handelt es sich bei diesem Druck um den in Strömungsrichtung des Abgases nach der Turbine 5 vorliegenden Druck, der dann allgemein auch mit pntu bezeichnet wird. Im vorliegenden Beispiel ist pntu gleich pvkat.

Der Druck pvkat zwischen der Turbine 5 und dem Katalysator 100 im Abgasstrang 105 kann auch berechnet werden, so dass der Drucksensor 95 in diesem Fall nicht erforderlich ist. Der Druck pvkat berechnet sich dabei zu:

$$pvkat = pu + \Delta p \qquad (5)$$

Dabei ist pu der Umgebungsdruck, der beispielsweise durch einen Umgebungsdrucksensor gemessen werden kann. $\Delta p$ ist die Druckdifferenz zwischen dem Umgebungsdruck an der Auspufföffnung und dem Druck zwischen der Turbine 5 und dem Katalysator 100 im Abgasstrang 105. Die Druckdifferenz $\Delta p$ kann beispielsweise in Abhängigkeit des das Auslassventil 25 in das Volumen 20 verlassenden Abgasmassenstroms msas mit Hilfe einer beispielsweise auf einem Prüfstand applizierten Kennlinie ermittelt werden. Bei der Applikation dieser Kennlinie kann für vorgegebene Abgasmassenströme msas mit Hilfe eines für die Applikation verwendeten Drucksensors jeweils die zugeordnete Druckdifferenz $\Delta p$ ermittelt und zur Bedatung der Kennlinie verwendet werden.

Auch die Kennlinie KLAF kann beispielsweise auf einem Prüfstand appliziert oder aus der in der Literatur bekannten Ausflusskennlinie abgeleitet werden. Dabei kann der Druck pvkat in Strömungsrichtung nach der Turbine 5 und vor dem Katalysator 100 mittels des Drucksensors 95 und der Druck pabnav mit Hilfe der Vorrichtung 35 oder eines separaten Drucksensors im Volumen 20 ermittelt werden. Unterschiedliche Druckverhältnisse pvkat/pabnav können durch geeignete Ansteuerung des Öffnungsgrades des Bypassventils 90 von der Motorsteuerung 110 vorgegeben werden. Für die verschiedenen vorgegebenen Druckverhältnisse pvkat/pabnav kann dann bei der Applikation beispielsweise mit Hilfe eines Luftmassenstrommessers im Volumen 20 die Strömungsgeschwindigkeit des Abgases ermittelt und in Bezug zur Schallgeschwindigkeit gesetzt werden, um für die vorgegebenen Werte pvkat/pabnav den jeweils zugeordneten dritten Korrekturfaktor fklav zu erhalten und damit die Kennlinie KLAF zu bedaten.

Der dritte Korrekturfaktor fklaf wird in einem vierten Multiplikationsglied 135 mit dem Ausgang des dritten Multiplikationsgliedes 130 multipliziert, so dass sich am Ausgang des vierten Multiplikationsgliedes 135 der bei den aktuellen Betriebs- bzw. Umweltbedingungen der Brennkraftmaschine 1 über die Turbine 5 und den Bypass 30 insgesamt aus dem Volumen 20 abfließende Abgasmassenstrom mstuby ergibt, der im ersten Subtraktionsglied 115 vom aus dem Auslassventil 25 in das Volumen 20 austretenden Abgasmassenstrom msas abgezogen wird.

Bei Druckverhältnissen pvkat/pabnav < 0,52 liefert die Kennlinie KLAF den Wert 1. Das Abgas strömt mit Schallgeschwindigkeit durch das Volumen 20. Mit steigendem Druckverhältnis pvkat/pabnav sinkt die Strömungsgeschwindigkeit des Abgases im Volumen 20, bis sie bei einem Druckverhältnis pvkat/pabnav = 1 den Wert Null erreicht. Ist abweichend von dem hier beschriebenen Beispiel kein Bypass um die Turbine 5 vorhanden, so entfällt das erste Additionsglied 120 und die Eingangsgröße des ersten Multiplikationsgliedes 125 ist der Normmassenstrom msntu durch die Turbine 5.

Die Zeitkonstante des Integrators 40 beträgt beispielsweise eine Sekunde. Die Zeitkonstante kann dabei so gewählt werden, dass sie die Einschwingzeit des Integrators 40 unter den geschilderten Normbedingungen repräsentiert. Diese Einschwingzeit kann bei spielsweise ebenfalls auf einem Prüfstand bei vorliegenden Normbedingungen, insbesondere hinsichtlich Temperatur und Druck, ermittelt werden. Dabei kann nach Einstellen eines konstanten Arbeitspunktes der Brennkraftmaschine für verschiedene vorgegebene Zeitkonstanten diejenige ermittelt werden, bei der der Abgasgegendruck pabnav am schnellsten einen stabilen Wert erreicht.

Erfindungsgemäß ist es nun vorgesehen, den Abgasgegendruck unabhängig von einem vorausgehenden dynamischen Betriebszustand der Brennkraftmaschine 1 nur für einen stationären Zustand der Brennkraftmaschine 1 mit möglichst wenig Rechenaufwand und hoher Präzision zu bestimmen. Zu diesem Zweck kann man den dem Volumen 20 zufließenden Abgasmassenstrom msas dem aus dem Volumen 20 abfließenden Abgasmassenstrom mstuby gleichsetzen und nach dem Abgasgegendruck pabnav auflösen. Der aus dem Volumen 20 abfließende Abgasmassenstrom mstuby ist der Abgasmassenstrom, der von der Turbine 5 abfließt, addiert mit dem Abgasmassenstrom, der über den Bypass 30 abfließt. Unter Normbedingungen handelt es sich dabei um den gemäß Figur 2 bestimmten normierten Abgasmassenstrom msntuby durch die Turbine 5 und über den Bypass 30. Dabei gilt gemäß dem Funktionsdiagramm nach Figur 2:

$$mstuby = msntuby * fpabnav * ftaikr * fklaf\ (pvkat/pabnav) \qquad (6)$$

Setzt man den aus dem Volumen 20 abfließenden Abgasmassenstrom mstuby gleich dem dem Volumen 20 zufließenden Abgasmassenstrom msas, so erhält man Aus Gleichung (6) unter Verwendung von Gleichung (3) mit pabnav_norm = 1013hPa folgendes:

$$pabnav * KLAF(pvkat/pabnav) = 1013hPa * msas/(msntuby * ftaikr) \qquad (7)$$

Durch Division der Gleichung (7) durch den Druck pvkat im Abgasstrang 105 in Strömungsrichtung des Abgases nach der Turbine 5 und vor dem Katalysator 100 und Substitution des Quotienten

$$pabnav/pvkat = x \qquad (8)$$

sowie

$$1013hPa * msas/(msntuby * ftaikr * pvkat) = a \qquad (9)$$

erhält man folgende Gleichung:

$$x * KLAF(1/x) = a \qquad (10).$$

Diese Gleichung (10) lässt sich nicht analytisch lösen. Deshalb wird für den gesamten Wertebereich des Wertes a für diskrete Werte von x jeweils der zugehörige Wert a gem. Gleichung (10) ermittelt und die somit gebildeten i Wertepaare (x, a)i werden in einer Tabelle in der Motorsteuerung 110 abgelegt. Auf diese Weise lässt sich beispielsweise mittels Interpolation eine Kennlinie INV_FUNC ermitteln, deren Eingangsgröße der Wert a und deren Ausgangsgrößen der Wert x ist. Alternativ kann für einen gegebenen Wert a aus der Tabelle der nächstliegenden Wert x ermittelt werden.

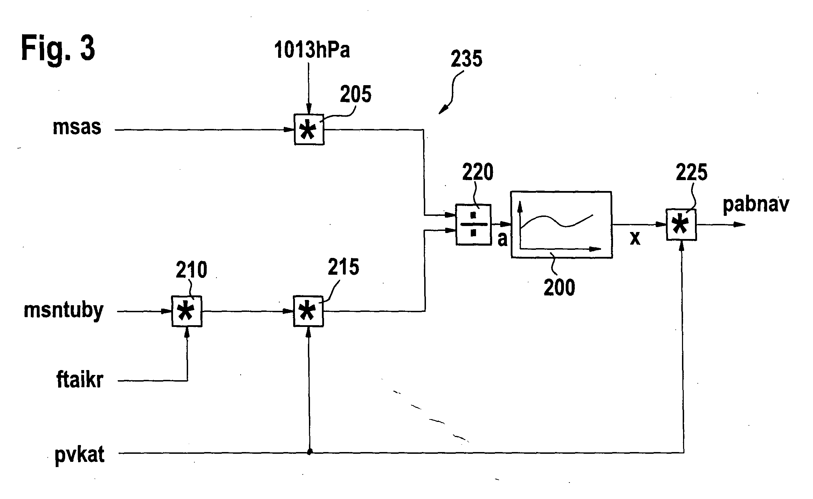

In Figur 3 ist nun ein Funktionsdiagramm zur Ermittlung des Abgasgegendruckes pabnav mit Hilfe der Kennlinie INV_FUNC dargestellt. Dieses Funktionsdiagramm stellt eine Vorrichtung 235 dar. Dabei wird der dem Volumen 20 zugeführte Abgasmassenstrom msas in einem fünften Multiplikationsglied 205 mit dem Normdruck 1013hPa multipliziert. Das Ergebnis wird einem dritten Divisionsglied 220 zugeführt und dort durch den Ausgang eines siebten Multiplikationsgliedes 215 dividiert. Im siebten Multiplikationsglied 215 wird der Druck pvkat im Abgasstrang 105 in Strömungsrichtung des Abgases nach der Turbine 5 und vor dem Katalysator 100 mit dem Ausgang eines sechsten Mtiltiplikationsgliedes 210 multipliziert. Im sechsten Multiplikationsglied 210 wird der normierte Abgasmassenstrom msntuby, der sich durch Überlagerung des normierten Abgasmassenstroms msntu durch die Turbine 5 und des normierten Abgasmassenstromes msnby durch den Bypass 30 ergibt mit dem ersten Korrekturfaktor ftaikr multipliziert. Somit ergibt sich am Ausgang des dritten Divisionsgliedes 220 der Wert a. Diese wird der Kennlinie INV_FUNC zugeführt, die in Figur 3 mit dem Bezugszeichen 200 gekennzeichnet ist und in der beschriebenen Weise an ihrem Ausgang den Wert x abgibt. Diese wird in einem achten Multiplikationsglied 225 mit dem Druck pvkat im Abgasstrang 105 in Strömungsrichtung des Abgases nach der Turbine 5 und vor dem Katalysator 100 multipliziert, sodass sich am Ausgang des achten Multiplikationsgliedes 225 der Abgasgegendruck pabnav ergibt.

**Patentansprüche**

1. Verfahren zum Betrieb einer Brennkraftmaschine (1) mit einem Abgasturbolader (5, 10, 15), **dadurch gekennzeichnet, dass** in einem stationären Zustand der Brennkraftmaschine (1) ein Abgasgegendruck aus der Bedingung abgeleitet wird, dass der in ein Volumen (20) zwischen mindestens einem Auslassventil (25) der Brennkraftmaschine (1) und einer Turbine (5) des Abgasturboladers (5, 10, 15) zufließende Abgasmassenstrom gleich dem aus diesem Volumen (20) abfließende Abgasmassenstrom ist.

2. Verfahren nach Anspruch 1, **dadurch gekennzeichnet, dass** der aus dem Volumen (20) abfließende Abgasmassenstrom der von der Turbine (5) abfließende Abgasmassenstrom ist.

3. Verfahren nach Anspruch 2, **dadurch gekennzeichnet, dass** die Turbine (5) einen Bypass (30) umfasst und dass der von der Turbine (5) abfließende Abgasmassenstrom aus der Summe eines konstanten Normmassenstroms durch die Turbine (5) selbst und eines von einem Öffnungsquerschnitt des Bypasses (30) abhängigen Normmassenstroms durch den Bypass (30) gebildet wird.

4. Verfahren nach Anspruch 3, **dadurch gekennzeichnet, dass** der Normmassenstrom durch den Bypass (30) in Abhängigkeit des Öffnungsquerschnitts des Bypasses (30) aus einer Kennlinie ermittelt wird.

5. Verfahren nach einem der Ansprüche 2 bis 4, **dadurch gekennzeichnet, dass** Abweichungen von Normbedingungen bei der Ermittlung des von der Turbine (5) abfließenden Abgasmassenstroms durch mindestens einen Korrekturfaktor für Temperatur, Druck und/oder Strömungsgeschwindigkeit berücksichtigt werden.

6. Verfahren nach Anspruch 5, **dadurch gekennzeichnet, dass** ein Korrekturfaktor für die Temperatur aus einer Wurzel des Quotienten einer Normtemperatur und der aktuellen Temperatur gebildet wird und dass ein Korrekturfaktor für den Druck aus einem Quotienten des ermittelten Druckes nach dem mindestens einen Auslassventil (25) und einem Normdruck gebildet wird.

7. Verfahren nach Anspruch 5 oder 6, **dadurch gekennzeichnet, dass** ein Korrekturfaktor für die Strömungsgeschwindigkeit aus einem Quotienten der aktuellen Strömungsgeschwindigkeit und der Schallgeschwindigkeit ermittelt wird.

8. Verfahren nach Anspruch 7, **dadurch gekennzeichnet, dass** der Korrekturfaktor für die Strömungsgeschwindigkeit aus einer Kennlinie in Abhängigkeit eines Quotienten eines Druckes nach der Turbine (5) und des ermittelten Druckes nach dem mindestens einen Auslassventil (25) ermittelt wird.

9. Verfahren nach einem der vorherigen Ansprüche, **dadurch gekennzeichnet, dass** zur Bestimmung des Abgasgegendruckes eine Kennlinie gebildet wird, die eine Eingangsgröße, die durch den dem Volumen (20) zufließenden Abgasmassenstrom multipliziert mit einem Normdruck und dividiert durch das Produkt aus einem Korrekturfaktor für die Temperatur, einem Druck nach der Turbine (5) und dem Normmassenstrom durch die Turbine (5) und den Bypass (30) gebildet wird, in eine Ausgangsgröße abbildet, die einem Quotienten aus dem Abgasgegendruck und einem Druck nach der Turbine (5) entspricht.

10. Vorrichtung (235) zum Betrieb einer Brennkraftmaschine (1) mit einem Abgasturbolader (5, 10, 15), **dadurch gekennzeichnet, dass** Mittel (200) vorgesehen sind, die in einem stationären Zustand der Brennkraftmaschine (1) einen Abgasgegendruck aus der Bedingung ableiten, dass der in ein Volumen (20) zwischen mindestens einem Auslassventil (25) der Brennkraftmaschine (1) und einer Turbine (5) des Abgasturboladers (5, 10, 15) zufließende Abgasmassenstrom gleich dem aus diesem Volumen (20) abfließende Abgasmassenstrom ist.

Fig. 1

EP 1 491 747 A2

Fig. 2

EP 1 491 747 A2

# Fig. 3

EP 1 491 747 A2